(19) Europäisches Patentamt
European Patent Office
Office européen des brevets

(11) **EP 1 716 263 B1**

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(21) Anmeldenummer: **05730996.5**

(22) Anmeldetag: **21.02.2005**

(51) Int Cl.:
**C22C 9/02** (2006.01)    **C22C 1/04** (2006.01)

(86) Internationale Anmeldenummer:
**PCT/EP2005/001764**

(87) Internationale Veröffentlichungsnummer:
**WO 2005/080620 (01.09.2005 Gazette 2005/35)**

(54) **GLEITLAGERWERKSTOFF**

SLIDE BEARING MATERIAL

MATERIAU DE PALIER COULISSANT

(84) Benannte Vertragsstaaten:
**DE FR GB**

(30) Priorität: **21.02.2004 DE 102004008631**

(43) Veröffentlichungstag der Anmeldung:
**02.11.2006 Patentblatt 2006/44**

(73) Patentinhaber: **KS Gleitlager GmbH**
**68789 St. Leon-Rot (DE)**

(72) Erfinder:
• **SCHUBERT, Werner**
**69168 Wiesloch (DE)**

• **STRIFLER, Adam**
**68789 St. Leon-Rot (DE)**
• **BICKLE, Wolfgang**
**68799 Reilingen (DE)**

(74) Vertreter: **Friz, Oliver**
**Dreiss, Fuhlendorf, Steimle & Becker**
**Patentanwälte**
**Postfach 10 37 62**
**70032 Stuttgart (DE)**

(56) Entgegenhaltungen:
**EP-A- 0 224 619      EP-A- 0 852 298**
**DE-A1- 10 138 058      US-A1- 2003 008 169**
**US-A1- 2003 096 136**

**Beschreibung**

Die Erfindung betrifft einen Gleitlagerwerkstoff mit einer metallischen Stützschicht und einer metallischen bleifreien porösen aufgesinterten Trägerschicht zur Aufnahme eines auf Polymerbasis beruhenden Gleitschichtmaterials, wobei die Trägerschicht aus einer Zinnbronze mit Zusätzen von Wismut gebildet ist.

Gleitlagerwerkstoffe und hieraus hergestellte Gleitlager sind vielfach bekannt geworden. Es wurden in der Vergangenheit Trägerschichten aus bleihaltiger Zinnbronze verwendet, z.B. CuSn10Pb10, in Verbindung mit einem Gleitschichtmaterial mit PTFE als Polymerbasis. Nach und nach setzt sich jedoch die Forderung nach bleifreien Lagerwerkstoffen durch.

Aus WO 03/031102 A1 ist beispielsweise ein bleifreier Gleitlagerwerkstoff bekannt, bei dem eine zunächst porös aufgesinterte Schicht zur Bildung der Gleitschicht vollständig verdichtet wird. Dieser Gleitlagerwerkstoff ist daher nicht gattungsgemäß. Die Zusammensetzung des Gleitschichtmaterials umfasst 8 bis 12 Gew.-% Zinn, 1 bis weniger als 5 Gew.-% Wismut, 0,03 bis 0,08 Gew.-% Phosphor und Rest Kupfer. Nach der Lehre dieser Druckschrift soll die Schicht aus einer Mischung unterschiedlicher Partikel verschiedener Zusammensetzung hergestellt werden, jedoch derart, dass im vollständig verdichteten Zustand der Gleitschicht ein Anteil von 5 Gew.% Wismut nicht überschritten wird, da dies die Matrixstruktur des Gleitschichtmaterials schwäche.

Aus EP 0 687 740 B1 ist ein bleifreies Lagermetall bekannt, welches als Monometall zur Bildung von Gleitelementen vergossen wird. Die bleifreie Zusammensetzung umfasst als Hauptbestandteile 4,85 bis 9 Gew.-% Zinn und 3,81 bis 9 Gew.-% Wismut und Rest Kupfer.

Aus EP 0 224 619 B1 ist eine Anzahl von zum Teil breifreien Lagermetalllegierungen bekannt, die 0,5 bis 4 Gew.-% Zinn, 10 bis 20 Gew.-% Wismut und 0 bis 1 Gew.-% Blei und andere sowie als Rest Kupfer aufweisen. Die Lagerlegierung kann durch Aufsintern, Aufgießen oder Aufwalzen auf eine Stützschicht aus Stahl aufgebracht werden.

Aus WO 03/013767 A1 ist ein nicht gattungsgemäßes Vollmateriallager mit Wandstärken zwischen 2 und 20 mm aus mit PTFE gefüllter Sinterbronze bekannt, bei dem ein verhältnismäßig feines Bronzepulver vor dem Sintergang zur Bildung der endgültigen Form kaltgepresst wird. Das Bronzepulver kann zusätzlich bis zu 11 Gew.-% Aluminium, Eisen, Wismut und/oder Blei aufweisen.

Aus EP 0 852 298 ist Gleitlagerwerkstoff mit einer Porosität der Bronzeschicht zwischen 40 und 70% bekannt.

Der vorliegenden Erfindung liegt die Aufgabe zugrunde, einen Gleitlagerwerkstoff der eingangs genannten Art dahingehend zu verbessern, dass er eine höhere Fresssicherheit aufweist und daher für den Einsatz bei hohen Gleitgeschwindigkeiten geeignet ist.

Diese Aufgabe wird bei einem Gleitlagerwerkstoff der genannten Art erfindungsgemäß dadurch gelöst, dass die Trägerschicht aus einem Sinterpulver gebildet ist, welches aus Pulverpartikeln besteht, die 9,5-11 Gew.-% Zinn und 7-13 Gew.-% Wismut und Kupfer umfassen, und dass die Pulverpartikel eine von der regelmäßigen Kugelform abweichende knollige Form jedoch ohne Kanten und Hinterschnitte aufweisen.

Es wurde erfindungsgemäß erkannt, dass bei dem hier in Rede stehenden Gleitlagerwerkstoff durch einen hohen Wismutgehalt im beanspruchten Bereich eine hervorragende Fresssicherheit erreicht werden kann, und zwar ohne, dass die Tragfähigkeit des Gleitlagerwerkstoffs herabgesetzt wird. Bei Verwendung eines regelmäßigen, kugelförmigen Sinterpulvers zur Herstellung der porösen Trägerschicht würde das Gleitschichtmaterial nicht in der erforderlichen Weise gehalten werden können. Es hat sich ferner gezeigt, dass sich erst durch den Zusatz von Wismut im beanspruchten Bereich ein bleifreies knollenförmiges Sinterpulver herstellen lässt, welches eine von der regelmäßigen Kugelform abweichende Form, jedoch ohne Kanten und Hinterschnitte, also auch keine spratzige Form, aufweist. Hierdurch lassen sich in bevorzugter Weise größere Porenvolumen erreichen als unter Verwendung von Sinterpulver überwiegend regelmäßiger sphärischer Form, was sich auf die Haltefähigkeit des polymeren Gleitschichtmaterials an der Trägerschicht positiv auswirkt aber dennoch mit einer hohen Tragfähigkeit, also Belastbarkeit einhergeht. Unter der beanspruchten von der regelmäßigen Kugelform abweichenden knolligen Form werden solche Pulverpartikel verstanden, die zwar nicht kugelig sind, jedoch keine Kanten und Hinterschnitte aufweisen wie etwa irreguläre spratzige Pulverpartikel, die in bizarren Strukturen erstarrt sind, sondern eine gleichwohl verrundete Gestalt jedoch mit einem Durchmesserverhältnis oder Längen/Breitenverhältnis von etwa 1,5 - 3. Die ideale Kugelform hat ein Durchmesserverhältnis von 1, in der Praxis liegen der überwiegendste Teil der kugeligen Pulverpartikel in einem Bereich von 1 - 1,1.

Zur Herstellung der Trägerschicht werden vorzugsweise knollige Pulverpartikel eingesetzt, die eine Fülldichte von 4,3 - 5 aufweisen. Unter der Fülldichte eines spezifischen Pulvermaterials (einer Charge) wird bei einer Befüllung eines vorgegebenen Volumens durch lose Schüttung des Pulvers derjenige Faktor verstanden, der multipliziert mit derjenigen Masse von Wasser, die dasselbe Volumen ausfüllen würde, die Masse des Pulvers ergibt. Bei Ausfüllung eines Volumens von 100 cm$^3$ durch ein lose geschüttetes Pulver würde sich somit eine Masse des Pulvers von 430 - 500 g ergeben. Dieser Wert der Fülldichte hängt bei gegebener Legierungszusammensetzung (und somit gegebenem spezifischem Gewicht) von der Geometrie des Pulvers ab.

Bevorzugtermaßen wird ein Porenvolumen von 30 bis 40 % verwendet. Die Porosität der aus aufgesinterten oder aufgespritzten metallischen Partikeln irregulärer Geometrie gebildeten porösen Trägerschicht kann durch Bestimmung des Verhältnisses des Flächenanteils der Poren zur Gesamtquerschnittsfläche der porösen Trägerschicht in einem metallografischen Schliff in Prozent berechnet und angegeben werden. Hierzu kann von einem Gleitlagerverbundwerkstoff nach dem Einimprägnieren des Gleitschichtmaterials ein metallografischer Schliff senkrecht zur Bandebene hergestellt werden. Es wird dann der Flächeninhalt der im Schnitt erscheinenden Bronze-Bestandteile mit einem Mikroskop durch Umfangsabtastung bestimmt. Dieser Flächeninhalt wird von der Gesamtquerschnittsfläche der Trägerschicht subtrahiert. Die restliche Fläche entfällt dann auf die Poren und kann als prozentualer Anteil zur Gesamtfläche als Porosität angegeben werden. Eine Auswertung von fünf verschiedenen Schliffen desselben Gleitlagerverbundwerkstoffs im Abstand weniger Zehntel Millimeter führt zu hinreichend genauen Werten.

Es zeigte sich auch, dass bei der Ausbildung poröser Trägerschichten mit nur punktueller Verbindung der aneinander gesinterten Pulverpartikel untereinander die Verwendung einer einzigen Art von Pulverpartikeln, also nur einer Zusammensetzung, wesentlich ist, um eine möglichst homogene Festigkeit innerhalb der Trägerschicht zu erreichen, die maßgeblich durch die Anbindungsbereiche der Pulverpartikel aneinander bestimmt ist.

Die knollenförmigen metallischen Pulverpartikel zur Bildung der porösen Trägerschicht haben vorteilhafterweise eine charakteristische Korngröße von 110 - 130 $\mu$m. Unter der charakteristischen Korngröße wird derjenige Größenwert in $\mu$m verstanden, bezüglich dem 50 Massen-% einer betrachteten Charge eine größere Korngröße aufweisen bzw. schwerer sind und 50 Masse-% eine geringere Korngröße aufweisen bzw. leichter sind. Es handelt sich also um eine mittlere Partikelgröße. Die Korngrößenverteilung wird durch Siebrückstandsuntersuchungen für eine betreffende Charge bestimmt. Das Ergebnis kann entweder (nicht kumuliert) in Massen-% für eine jeweilige Maschenweite angegeben werden oder kumuliert nach DIN ISO 4497 (so dass bei der geringsten Maschenweite nahezu 100 Massen-% ermittelt wird). Der kumulierte Siebrückstand kann durch eine Verteilungsfunktion angegeben werden, nämlich

$$R = e^{-\left(\frac{t}{\eta}\right)^{\beta}}$$

R = kumulierter Siebrückstand
t = Maschenweite
$\eta$ = charakteristische Korngröße
$\beta$ = Formparameter (=Steigung der Geraden bei logarithmischer Auftragung nach DIN 66 145).

Eine bevorzugte Korngrößenverteilung ist gekennzeichnet durch einen Formparameter $\beta$ von 6 - 200 und eine charakteristische Korngröße im oben angegebenen Bereich.

Bevorzugte Zusammensetzungen der Pulverpartikel ergeben sich aus den weiteren Patentansprüchen. Insbesondere besteht die Legierung aus den in den Patentansprüchen angegebenen Legierungsbestandteilen gegebenenfalls mit verunreinigungsbedingten Zusätzen in der Gesamtmenge von weniger als 1 Gew.-%.

Eine bevorzugte Legierungszusammensetzung für die Herstellung der zur Bildung der Trägerschicht verwandten Pulverpartikel ist eine CuSn10Bi8-Legierung.

Nach einer bevorzugten Ausführungsform des erfindungsgemäßen Gleitlagerwerkstoffs umfasst das Gleitschichtmaterial PTFE als Polymerbasis. Solchenfalls wird die Tragfähigkeit des Lagerwerkstoffs durch die poröse Trägerschicht aus Zinnbronze bereitgestellt, wobei die knollenförmigen Pulverpartikel dieser Schicht eine hohe Tragfähigkeit sichern, die beispielsweise höher ist als bei aus unregelmäßigen irregulären spratzigen Pulvermaterialien gebildeten Schichten. Der hohe Anteil von Wismut im beanspruchten Bereich unterstützt die schmierende Wirkung des PTFE-Gleitschichtmaterials und erhöht damit die Fresssicherheit des erfindungsgemäßen Gleitlagerwerkstoffs.

Nach einer weiteren bevorzugten Ausführungsform des erfindungsgemäßen Gleitlagerwerkstoffs umfasst das Gleitschichtmaterial PVDF und/oder PEEK als Polymerbasis. Diese beiden Polymere vermögen dem Gleitlagerwerkstoff eine hinreichende Tragfähigkeit zu vermitteln. In diesem Fall wirkt die aufgesinterte Zinnbronzeschicht nur als Haftvermittler für das polymere Gleitschichtmaterial, welches weitgehend die Tragfunktion des Lagers übernimmt.

Das Gleitschichtmaterial könnte Füllstoffe aufweisen. Als Füllstoffe kommen in Betracht etwa 5-12 Vol.-% Zinksulfid oder Bariumsulfat und/oder 5-12 Vol.-% Graphit. Auch der Zusatz von 2 - 6 Vol.-% Kohlenstofffasern ist denkbar.

## Patentansprüche

1.  Gleitlagerwerkstoff mit einer metallischen Stützschicht und einer metallischen bleifreien porösen aufgesinterten Trägerschicht zur Aufnahme eines auf Polymerbasis beruhenden Gleitschichtmaterials, wobei die Trägerschicht aus einer Zinnbronze mit Zusätzen von Wismut gebildet ist, wobei die Trägerschicht aus einem Sinterpulver aus Zinnbronze der Zusammensetzung 9,5 - 11 Gew.-% Zinn, 7 - 13 Gew.-% Wismut, 0 - 4,0 Gew.-% Zink und Rest Kupfer und Verunreinigungen gebildet ist, und die Pulverpartikel eine von der regelmäßigen Kugelform abweichende knollige Form jedoch ohne Kanten und Hinterschnitte mit einem Längen/Breitenverhältnis von 1,5 - 3 aufweisen und die Trägerschicht ein Porenvolumen von 28 - 45 % aufweist.

**2.** Gleitlagerwerkstoff nach Anspruch 1, **dadurch gekennzeichnet, dass** die Trägerschicht ein Porenvolumen von 30 - 40 % aufweist.

**3.** Gleitlagerverbundwerkstoff nach Anspruch 1 oder 2, **dadurch gekennzeichnet, dass** die Korngrößenverteilung der metallischen Partikel eine charakteristische Korngröße von 100 - 150 $\mu$m, insbesondere von 110 - 130 $\mu$m aufweist.

**4.** Gleitlagerverbundwerkstoff nach Anspruch 1, 2 oder 3, **dadurch gekennzeichnet, dass** die Korngrößenverteilung der metallischen Partikel durch einen Formparameter β von 6 - 200 bezeichnet ist.

**5.** Gleitlagerwerkstoff nach einem oder mehreren der vorstehenden Ansprüche, **dadurch gekennzeichnet, dass** die Pulverpartikel 7 - 11 Gew.-% Wismut umfassen.

**6.** Gleitlagerwerkstoff nach Anspruch 5, **dadurch gekennzeichnet, dass** die Pulverpartikel 7,5 - 10 Gew.-% Wismut umfassen

**7.** Gleitlagerwerkstoff nach einem oder mehreren der vorstehenden Ansprüche, **dadurch gekennzeichnet, dass** die Pulverpartikel 9,5 - 10,5 Gew.-% Zinn umfassen.

**8.** Gleitlagerwerkstoff nach einem oder mehreren der vorstehenden Ansprüche, **dadurch gekennzeichnet, dass** das Gleitschichtmaterial PTFE als Polymerbasis umfasst.

**9.** Gleitlagerwerkstoff nach einem oder mehreren der vorstehenden Ansprüche, **dadurch gekennzeichnet, dass** das Gleitschichtmaterial PVDF und/oder PEEK als Polymerbasis umfasst.

**10.** Gleitlagerwerkstoff nach einem oder mehreren der vorstehenden Ansprüche, **dadurch gekennzeichnet, dass** das Gleitschichtmaterial zusätzlich Füllstoffe umfasst.

**11.** Gleitlagerbuchse, hergestellt aus einem Gleitlagerverbundwerkstoff nach einem oder mehreren der vorstehenden Ansprüche.

**Claims**

**1.** Slide bearing composite material comprising a metallic support layer and a metallic, lead-free, porous carrier layer sintered thereon for receiving a sliding layer material on a polymer basis, wherein the carrier layer is formed from tin bronze with additives of bismuth, wherein the carrier layer is formed from a tin-bronze sinter powder comprised of 9,5 to 11 weight-% of tin, 7 to 13 weight-% of bismuth, 0 - 4,0 weight-% of zinc and the rest copper and impurities, wherein the powder particles have a bulbous shape deviating from a regular spherical shape, but without edges and undercuts and having a length/width ratio of 1,5 - 3 and the carrier layer having a pore volume of 28 to 45 %.

**2.** Slide bearing material according to claim 1, **characterized in that** the carrier layer has a pore volume of 30 to 40 %.

**3.** Slide bearing composite material according to claim 1 or 2, **characterized in that** the grain size distribution of the metallic particles comprises a characteristic grain size of 100 to 150 $\mu$m, in particular of 110 to 130 $\mu$m.

**4.** Slide bearing composite material according to claim 1, 2 or 3, **characterized in that** the grain size distribution of the metallic particles is **characterized by** a shape parameter β of 6 to 200.

**5.** Slide bearing composite material according to any one or more of the preceding claims, **characterized in that** the powder particles comprise 7 to 11 weight-% of bismuth.

**6.** Slide bearing material according to claim 5, **characterized in that** the powder particles comprise 7.5 to 10 weight-% of bismuth.

**7.** Slide bearing material according to any one or more of the preceding claims, **characterized in that** the powder particles comprise 9,5 to 10,5 weight-% of tin.

**8.** Slide bearing material according to any one or more of the preceding claims, **characterized in that** the slide bearing material comprises PTFE as a polymer basis.

**9.** Slide bearing material according to any one or more of the preceding claims, **characterized in that** the slide bearing material comprises PVDF and/or PEEK as a polymer basis.

**10.** Slide bearing material according to any one or more of the preceding claims, **characterized in that** the slide bearing material comprises additional fillers.

**11.** Slide bearing bushing produced from a slide bearing composite material according to any one or more of the preceding claims.

**Revendications**

1. Matériau pour palier lisse avec une couche d'appui métallique et, agglomérée par frittage sur celle-ci, une couche support métallique poreuse exempte de plomb destinée à recevoir un matériau de couche de glissement à base de polymère, la couche support étant composée d'un bronze ordinaire additionné de bismuth, dans lequel la couche support est formée d'une poudre frittée de bronze ordinaire composée de 9,5 à 11 % en poids d'étain, 7 à 13 % en poids de bismuth, 0 à 4,0 % en poids de zinc et, pour le reste, du cuivre et des impuretés, les particules de poudre présentant une forme de bulbe qui s'éloigne de la forme sphérique régulière sans toutefois comporter d'arêtes ni de contre-dépouilles, avec un rapport longueur/largeur compris entre 1,5 et 3, et présentant un volume poreux compris entre 28 et 45 %.

2. Matériau pour palier lisse selon la revendication 1, **caractérisé en ce que** la couche support présente un volume poreux compris entre 30 et 40 %.

3. Matériau composite pour palier lisse selon la revendication 1 ou la revendication 2, **caractérisé en ce que** la distribution granulométrique des particules métalliques présente une grosseur de grain caractéristique de 100 à 150 $\mu$m, notamment de 110 à 130 $\mu$m.

4. Matériau composite selon la revendication 1, 2 ou 3, **caractérisé en ce que** la distribution granulométrique des particules métalliques est **caractérisée par** un paramètre de forme $\beta$ compris entre 6 et 200.

5. Matériau pour palier lisse selon une ou plusieurs des revendications précédentes, **caractérisé en ce que** les particules de poudre contiennent 7 à 11 % en poids de bismuth.

6. Matériau pour palier lisse selon la revendication 5, **caractérisé en ce que** les particules de poudre contiennent 7,5 à 10 % en poids de bismuth.

7. Matériau pour palier lisse selon une ou plusieurs des revendications précédentes, **caractérisé en ce que** les particules de poudre contiennent 9,5 à 10,5 % en poids d'étain.

8. Matériau pour palier lisse selon une ou plusieurs des revendications précédentes, **caractérisé en ce que** le matériau de la couche de glissement contient du PTFE comme base polymère.

9. Matériau pour palier lisse selon une ou plusieurs des revendications précédentes, **caractérisé en ce que** le matériau pour palier lisse contient du PVDF e/ou du PEEK comme base polymère.

10. Matériau pour palier lisse selon une ou plusieurs des revendications précédentes, **caractérisé en ce que** le matériau de la couche de glissement contient des charges supplémentaires.

11. Coussinet lisse fabriqué à partir d'un matériau composite pour palier lisse selon une ou plusieurs des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03031102 A1
- EP 0687740 B1
- EP 0224619 B1
- WO 03013767 A1
- EP 0852298 A